Europäisches Patentamt

European Patent Office

Office européen des brevets

(11) Veröffentlichungsnummer: **0 035 794**
**A1**

(12) # EUROPÄISCHE PATENTANMELDUNG

(21) Anmeldenummer: **81101771.4**

(22) Anmeldetag: **10.03.81**

(51) Int. Cl.³: **G 03 B 3/10**
**G 01 C 3/08, G 02 B 7/11**

(30) Priorität: **12.03.80 DE 3009534**

(43) Veröffentlichungstag der Anmeldung:
**16.09.81 Patentblatt 81/37**

(84) Benannte Vertragsstaaten:
**BE FR GB IT NL**

(71) Anmelder: **SIEMENS AKTIENGESELLSCHAFT Berlin und München**
**Postfach 22 02 61**
**D-8000 München 22(DE)**

(72) Erfinder: **Herbst, Heiner, Dr.**
**Anechostrasse 29**
**D-8000 München 82(DE)**

(54) **Anordnung zur optoelektronischen Entfernungsmessung.**

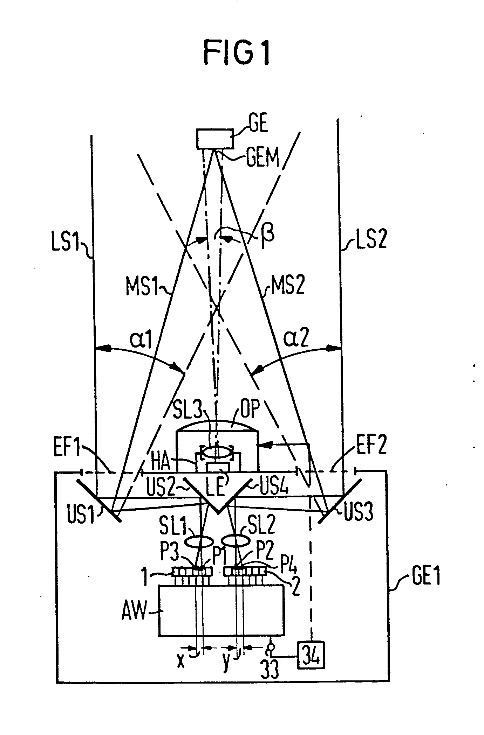

(57) Die Erfindung bezieht sich auf einen optoelektronischen Entfernungsmesser mit zwei linearen Bildsensoren, (1,2) auf die jeweils Ausschnitte einander entsprechender Zeilen zweier von einem Gegenstand (GE) abgeleiteter Abbildungen projiziert werden. Diejenige Positionsverschiebung der Sensorsignale des einen Bildsensors gegenüber denen des anderen Bildsensors, bei der eine maximale Korrelation der Sensorsignale auftritt, stellt ein Maß für die Entfernung des Gegenstandes (GE) dar. Angestrebt wird die Ausschaltung von Meßfehlern, die sich bei einer zu gleichmäßigen Belichtung der einzelnen Sensorelemente ergeben. Dies wird erfindungsgemäß dadurch erreicht, daß eine mit dem Entfernungsmesser verbundene Lichtquelle (LE) vorgesehen ist, deren Lichtbündel mindestens einen Teil des Gegenstandes beleuchtet, wobei dieser Teil innerhalb der Winkelbereiche ($\alpha$1, $\alpha$2) zweier optischer Einrichtungen liegt, über die die auf die Bildsensoren (1,2) projizierten Abbildungen gewonnen werden. Der Anwendungsbereich umfaßt Entfernungsmesser für fotografische und elektronische Kameras. (Fig. 1)

FIG 1

EP 0 035 794 A1

SIEMENS AKTIENGESELLSCHAFT     Unser Zeichen
Berlin und München          VPA 80 P 7 0 1 9 E

Anordnung zur optoelektronischen Entfernungsmessung

Die Erfindung bezieht sich auf eine Anordnung zur optoelektronischen Entfernungsmessung nach dem Oberbegriff des Patentanspruchs 1.

Anordnungen dieser Art wurden bereits in der DE-OS 28 13 914 und den älteren Patentanmeldungen P 28 13 913.1, P 28 38 647.2, P 29 36 491.8 und P 29 36 535.3 beschrieben. Die Sensorelemente bestehen dabei aus Fotodioden, MIS-Kondensatoren, oder aus Fotodioden, denen jeweils MIS-Kondensatoren zugeordnet sind. Innerhalb einzelner Zeitintervalle, die auch als Integrationszeiten bezeichnet werden, sammeln sich in den Sensorelementen jeweils optisch erzeugte Ladungsträger an, aus denen dann die Sensorsignale abgeleitet werden. Bei den Anordnungen nach der DE-OS 28 13 914 und der älteren Anmeldung P 28 13 913.1 erfolgt eine analoge Verarbeitung der Sensorsignale, während sich die Anordnungen nach den weiterhin genannten älteren Patentanmeldungen davon insofern unterscheiden, als die Sensorsignale vor ihrer weiteren Verarbeitung zunächst digitalisiert werden. Dies geschieht in den Sensorelementen nachgeschalteten Bewertern, die in Abhängigkeit vom Überschreiten einer Bezugsladung in den Sensorelementen jeweils zwischen zwei digitalen Ausgangssignalen umschaltbar sind.

Schwierigkeiten ergeben sich beim Betrieb solcher Entfernungsmesser immer dann, wenn die Belichtungsunterschiede zwischen den einzelnen Sensorelementen gering sind. In diesem Fall wirken sich nämlich Parameter-St 1 Hub / 06.03.80

toleranzen der einzelnen Sensorelemente oder der ihnen nachgeordneten Schaltungsteile besonders nachteilig auf die Meßergebnisse aus.

Der Erfindung liegt die Aufgabe zugrunde, bei einer Anordnung zur optoelektronischen Entfernungsmessung der eingangs genannten Art diejenigen Meßfehler zu verringern, die sich aus einer zu gleichmäßigen Belichtung der einzelnen Sensorelemente ergeben. Diese Aufgabe wird durch die im Patentanspruch 1 gekennzeichneten Merkmale gelöst.

Der mit der Erfindung erzielbare Vorteil besteht insbesondere darin, daß die zusätzliche Belichtung mindestens eines Teiles des in seiner Entfernung zu bestimmenden Gegenstandes zu einer so unterschiedlichen Belichtung der einzelnen Sensorelemente führt, daß die Parametertoleranzen der Sensorelemente und der ihnen nachgeordneten Schaltungsteile die Messung nicht mehr verfälschen. Auch wenn die Belichtung der Sensorelemente durch die projizierten Zeilenausschnitte so schwach ist, daß zum Fotografieren des Gegenstandes eine zusätzliche Aufhellung der Szene durch ein Blitzlicht notwendig ist, trägt die Erfindung dazu bei, daß Sensorsignale mit für eine zuverlässige Entfernungsmessung ausreichenden Größenunterschieden abgeleitet werden. Hierbei werden auch die Fehlereinflüsse ausgeschaltet, die von den innerhalb der Integrationszeiten thermisch generierten Ladungsträgern hervorgerufen werden.

Vorteilhafte Ausgestaltungen der Erfindung sind in den Patentansprüchen 2 bis 12 gekennzeichnet.

Die Erfindung wird nachfolgend anhand der Zeichnung näher erläutert. Dabei zeigen:

Fig. 1  ein Ausführungsbeispiel der Erfindung,

Fig. 2  ein Prinzipschaltbild für die Ansteuerung einer
in der Anordnung nach Fig. 1 vorgesehenen
Leuchtdiode,

Fig. 3  das Diagramm einer Belichtungsverteilung längs
eines linearen Bildsensors nach Fig. 1 und

Figuren 4 bis 9 die in der Anordnung nach Fig. 1 enthaltenen Bildsensoren einschließlich weiterer
zum Auswerten der Sensorsignale dienender
Schaltungsteile.

In Fig. 1 ist eine Anordnung nach der Erfindung in Verbindung mit einer fotografischen Kamera dargestellt,
die ein Gehäuse GE1 und eine Optik OP aufweist. Eine
erste, gegenüber dem Gehäuse GE1 ortsfest angeordnete
optische Einrichtung besteht aus den Umlenkspiegeln
US1 und US2 und aus einer Sammellinse SL1, wobei der
Spiegel US1 hinter einem Eintrittsfenster EF1 liegt,
während der Sammellinse SL1 ein linearer Bildsensor 1
zugeordnet ist. Die entsprechenden Teile einer zweiten
optischen Einrichtung sind mit US3, US4 und SL2 bezeichnet, ein zweites Eintrittsfenster mit EF2 und ein
zweiter linearer Bildsensor mit 2. Die Ausgänge der
einzelnen Sensorelemente jedes Bildsensors 1, 2 sind
mit einer Auswerteschaltung AS verbunden, die über einen
Ausgang 33 mit einer Vorrichtung 34 beschaltet ist.
Letztere dient zum Einstellen des Abstandes der Optik OP
von einer im einzelnen nicht dargestellten Bildebene.

Ein in Richtung der optischen Achse verlaufender Lichtstrahl LS1 wird nach Fig. 1 durch die Spiegel US1 und
US2 umgelenkt und erreicht über die Sammellinse LS1
einen Punkt P1 des Bildsensors 1. In analoger Weise wird
Lichtstrahl LS2 über US3, US4 und SL2 auf den Punkt P2
des Bildsensors 2 abgelenkt. P1 und P2 stellen somit
die Bildpunkte eines sich in einem sehr großen Abstand von der Kamera GE1 befindenden, sehr kleinen Gegenstandes dar. Betrachtet man nun einen Gegenstand GE, der von der Kamera GE1 weniger weit entfernt ist, so werden die von seinem Mittelpunkt ausgehenden Lichtstrahlen MS1 und MS2 auf die Punkte P3 und P4 hin abgelenkt. Bezeichnet man die sich zwischen den Punkten P1 und P3 ergebende Verschiebung mit x und die sich zwischen P2 und P4 ergebende Verschiebung mit y, so entspricht x+y der Positionsverschiebung des über die eine optische Einrichtung von dem Punkt GEM auf den Bildsensor 1 projizierten Bildpunktes gegenüber dem über die andere optische Einrichtung auf den Bildsensor 2 projizierten Bildpunkt von GEM. Eine entsprechende Positionsverschiebung erfahren auch alle weiteren auf den Bildsensor 1 projizierten Bildpunkte gegenüber den auf den Bildsensor 2 projizierten Bildpunkten. Die Positionsverschiebung x+y stellt dabei ein Maß für die Entfernung des Gegenstandes GE von der fotografischen Kamera GE1 dar.

Die Positionsverschiebung x+y wird in der Auswerteschaltung AW in der Weise ermittelt, daß die Sensorsignale des Bildsensors 1 mit den Sensorsignalen des Bildsensors 2 in Abhängigkeit von unterschiedlichen Positionsverschiebungen hinsichtlich ihrer Korrelation überprüft werden. Die Positionsverschiebung, bei der die größte Korrelation auftritt, entspricht dabei dem gesuchten Wert x+y. Am Ausgang 33 der Auswerteschaltung AW ist eine elektrische Größe abgreifbar, die diesem Wert und damit der Entfernung des Gegenstandes GE entspricht. Sie bewirkt mit Hilfe der Vorrichtung 34 eine Einstellung des Abstandes des Objektivs OP von einer Bildebene auf einen solchen Wert, daß der Gegenstand GE auf diese Bildebene scharf abgebildet wird.

Über die optischen Einrichtungen US1, US2, SL1 und US3, US4, SL2 werden auf die linearen Bildsensoren 1 und 2 Ausschnitte ein- und derselben Zeile des Gegenstandes GE und seiner Umgebung projiziert. Zur Erhöhung des Helligkeitskontrastes innerhalb dieser Zeilenausschnitte dient eine in Fig. 1 mit LE bezeichnete Leuchtdiode (LED), die mit dem Gehäuse GE1 fest verbunden ist. Sie ist derart angeordnet, daß ein von ihr für die Dauer einer Entfernungsmessung abgegebenes Lichtbündel in Richtung der optischen Achse verläuft und mindestens einen Teil des Gegenstandes GE beleuchtet. Bezeichnet man mit $\alpha 1$ und $\alpha 2$ Winkelbereiche, die über die optischen Einrichtungen jeweils auf die Bildsensoren 1 und 2 abgebildet und somit linear abgetastet werden, so soll das von LE ausgehende Lichtbündel einen so kleinen Öffnungswinkel ß aufweisen, daß der hierdurch beleuchtete Teil des Gegenstandes GE einschließlich seiner unmittelbaren Umgebung noch innerhalb der Winkelbereiche $\alpha 1$ und $\alpha 2$ liegt. Hierzu beträgt ß zweckmäßigerweise etwa 4 bis 5 Grad.

Die erforderliche starke Bündelung des von der Leuchtdiode LE abgegebenen Lichtstrahlen kann mit Vorteil entweder durch eine Blende oder durch eine Sammellinse SL3 hervorgerufen werden, die in einer mit dem Gehäuse GE1 verbundenen Halterung HA gelagert ist. Dabei befindet sich die leuchtende Fläche der Leuchtdiode etwa in einem der Brennweite entsprechenden Abstand von der Sammellinse SL3. Bei einer leuchtenden Fläche von etwa 250 µm x 250 µm kommt eine Brennweite der Sammellinse SL3 von etwa 10 mm in Betracht.

Anstelle einer einzigen Leuchtdiode LE können auch mehrere Leuchtdioden dicht nebeneinander angeordnet werden, um ein stärkeres Lichtbündel zu erzeugen. Mit Vorteil werden eine oder mehrere Infrarot-Leuchtdioden verwendet, deren Strahlung in einem Spektralbereich von etwa --      950 nm, d. h. oberhalb desjenigen des sichtbaren Lichtes, liegt. Hierbei wird ein höherer Wirkungsgrad bei der Erzeugung des zusätzlichen Kontrastes erreicht als mit Leuchtdioden, die sichtbares Licht abgeben.

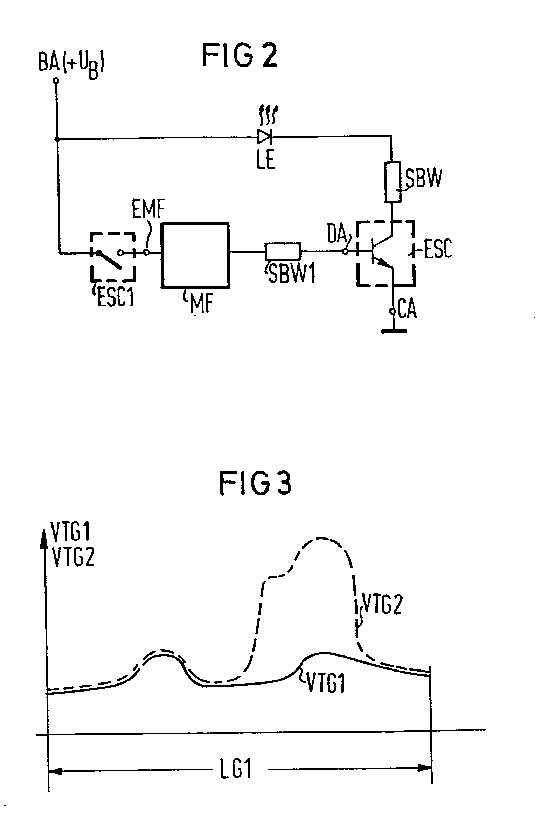

Fig. 2 zeigt ein Prinzipschaltbild für die Ansteuerung der Leuchtdiode LE. Diese ist mit einem Strombegrenzungswiderstand SBW und einem elektronischen Schalter ESC in Serie geschaltet, wobei diese Serienschaltung über einen Anschluß BA mit einer Betriebsspannung von z. B. 5 Volt und über einen Anschluß CA mit dem Bezugspotential beschaltet ist. Ein Steuereingang DA des elektronischen Schalters ist über einen weiteren Strombegrenzungswiderstand SBW1 mit einem Monoflop MF verbunden, das über einen Eingang EMF jeweils zur Abgabe eines Impulses von etwa 20 bis 50 ms Dauer getriggert werden kann. Der Eingang EMF ist mit dem Anschluß BA der Betriebsspannungsquelle über einen Schalter ESC1 verbunden, der kurzzeitig geschlossen wird, um das Monoflop MF zu triggern. Der elektronische Schalter ESC besteht vorzugsweise aus einem bipolaren Schalttransistor, dessen Emitter-Kollektor-Strecke in Serie zu der Leuchtdiode LE liegt und dessen Basisanschluß mit dem Strombegrenzungswiderstand SBW1 verbunden ist.

In Fig. 3 ist eine typische Helligkeitsverteilung VTG1 über der Länge LG1 des Bildsensors 1 dargestellt, wie sie bei der Projektion eines kontrastarmen Zeilenausschnitts entsteht. Durch die zusätzliche Beleuchtung eines Teiles des zu fotografierenden Gegenstandes GE mittels der Leuchtdiode LE entsteht die gestrichelt gezeichnete Helligkeitsverteilung VTG2, die einen wesentlich besseren Kontrast erkennen läßt.

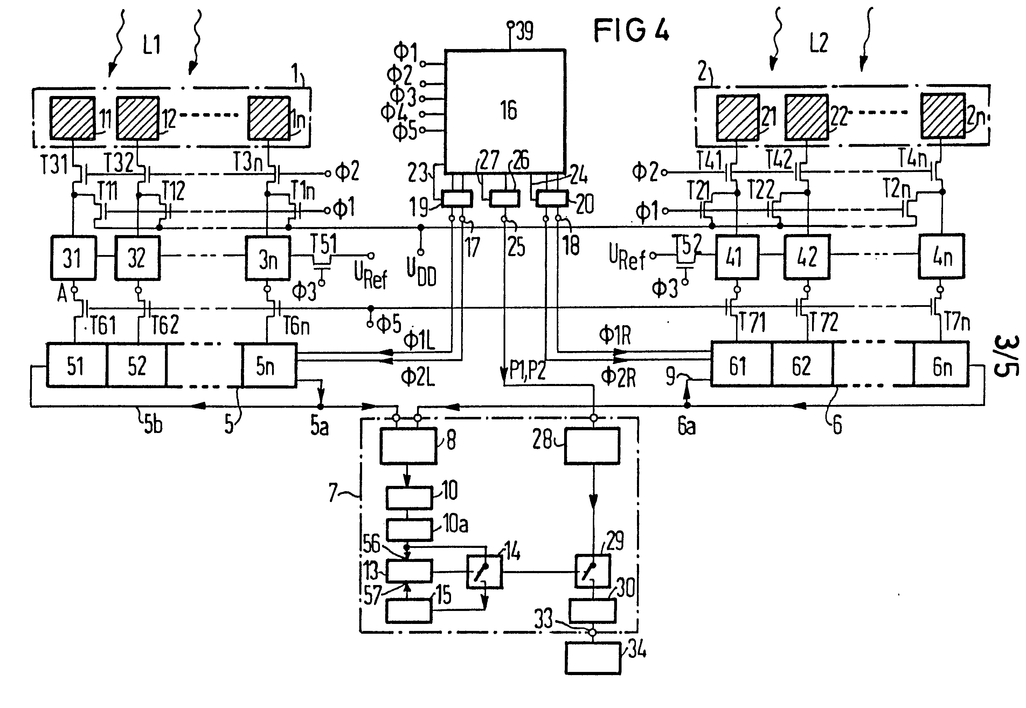

Die in Fig. 4 dargestellte Schaltung zeigt zwei lineare Bildsensoren 1 und 2, die Sensorelementen 11, 12...1n und 21, 22...2n bestückt sind, und die nachgeordnete Auswerteschaltung AW. Die Bildsensoren 1, 2 sind auf einem dotierten Halbleiterkörper eines ersten Leitfähigkeitstyps integriert. Werden die Sensorelemente als Fotodioden realisiert, so stellen die schraffierten Rechtecke an einer Grenzfläche des Halbleiterkörpers angeordnete Bereiche eines zu dem ersten entgegengesetzten, zweiten Leitfähigkeitstyps dar. Die Sensorelemente 11...1n und 21...2n sind über individuell zugeordnete Schalttransistoren T11...T1n und T31...T3n sowie T21...T2n und T41...T4n mit einem Anschluß verbunden, der mit einer Versorgungsspannung $U_{DD}$ beschaltet ist. Die Gateelektroden der Schalttransistoren T11...T1n und T21...T2n sind jeweils an einen gemeinsamen Anschluß geführt, dem eine Taktimpulsspannung $\emptyset 1$ zugeführt wird, während die Gateelektroden der Schalttransistoren T31... T3n und T41...T4n mit Anschlüssen verbunden sind, die an einer Impulsspannung $\emptyset 2$ liegen.

Die Sensorelemente 11...1n und 21...2n sind über die Schalttransistoren T31...T3n und T41...T4n mit den Eingängen von Bewertern 31...3n und 41...4n verbunden.

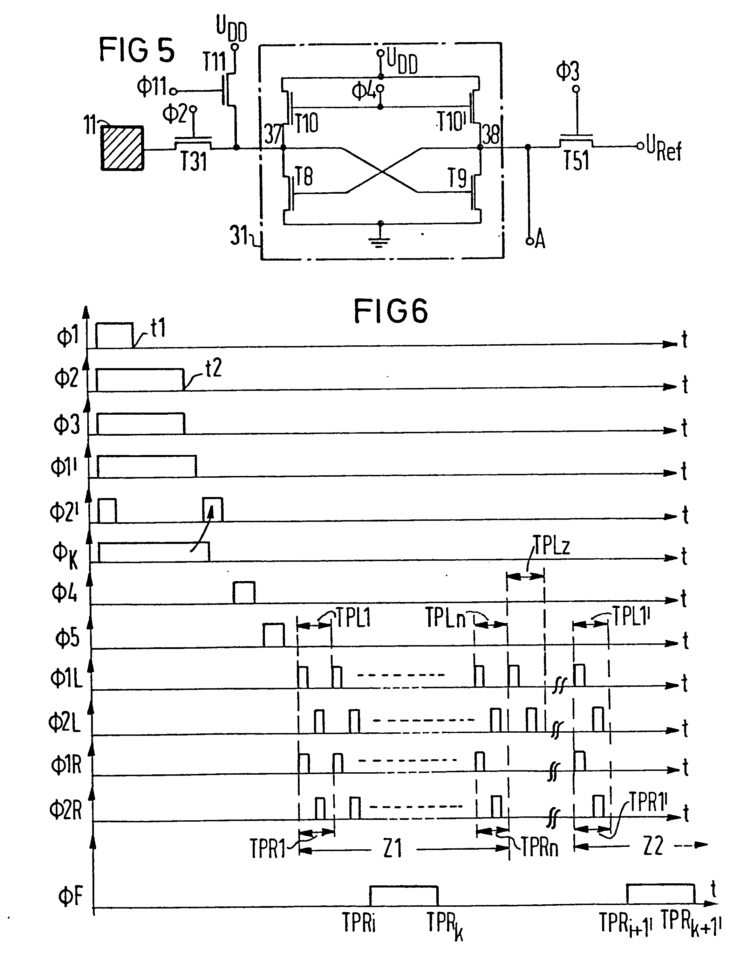

Eine zweckmäßige schaltungstechnische Durchbildung der Bewerter 31...3n und 41...4n soll anhand der Fig. 5 noch näher beschrieben werden. Weitere Eingänge dieser Bewerter sind über gemeinsame Schalttransistoren T51 und T52, deren Gateelektroden mit einer Taktimpulsspannung $\emptyset 3$ beschaltet sind, an Anschlüsse geführt, die an einer Referenzspannung $U_{Ref}$ liegen. Die Bewerter 31...3n und 41...4n können in Abhängigkeit von den Spannungen, die ihnen über die Schalttransistoren T31...T3n und T41...4n zugeführt werden, einen von zwei möglichen Schaltzuständen einnehmen. Ihre an A abgreifbaren Ausgangssignale S11...S1n und S21...S2n, die je nach dem eingenommenen Schaltzustand dem logischen Spannungspegel "1" oder "0" entsprechen, werden über Transfertransistoren T61...T6n und T71...T7n, deren Gateelektroden mit einer gemeinsamen Taktimpulsspannung $\emptyset 5$ beaufschlagt sind, den Eingängen der einzelnen Stufen 51, 52...5n und 61, 62... 6n zweier den Bildsensoren individuell zugeordneter Schieberegister 5 und 6 zugeführt, die vorzugsweise als zweiphasige, dynamische Schieberegister ausgebildet sind. Das Schieberegister 5 weist zwei Eingänge auf, die mit Taktimpulsspannungen $\emptyset 1L$ und $\emptyset 2L$ beschaltet sind, während das Schieberegister 6 zwei Eingänge besitzt, denen die Taktimpulsspannung $\emptyset 1R$ und $\emptyset 2R$ zugeführt werden. Der Ausgang 5a der Stufe 5n ist einerseits über eine Leitung 5b mit dem Eingang der Stufe 51 verbunden und andererseits an einen ersten Eingang einer in einem Auswerteteil 7 angeordneten logischen Schaltung 8. Der Ausgang 6a der Stufe 6n ist in entsprechender Weise über eine Leitung 9 an den Eingang der Stufe 61 geführt und andererseits mit einem zweiten Eingang von 8 verbunden.

Der logischen Schaltung 8 ist ein Zähler 10 nachgeschaltet, dessen Ausgang über einen Speicher 10a mit dem ersten Eingang eines digitalen Komparators 13 und über einen elektronischen Schalter 14 mit einem Speicher 15 verbunden ist. Der Ausgang des Speichers 15 ist an einen zweiten Eingang des digitalen Komparators 13 geführt.

Ein Taktimpulsgeber 16 ist mit Ausgängen für die Taktimpulsspannungen $\emptyset 1$ bis $\emptyset 3$ und $\emptyset 5$ versehen. Über weitere Ausgänge 17 und 18 werden die Taktimpulsspannungen $\emptyset 1L$ und $\emptyset 2L$ sowie $\emptyset 1R$ und $\emptyset 1R$ abgegeben, wobei in Serie zu den Ausgängen 17 eine Torschaltung 19 und in Serie zu den Ausgängen 18 eine Torschaltung 20 angeordnet sind. Die Steuereingänge von 19 und 20 werden über Leitungen 23 und 24 mit noch näher zu beschreibenden Steuersignalen beaufschlagt. Der Taktimpulsgeber weist einen weiteren Ausgang 25 auf, zu dem eine weitere Torschaltung 26 in Serie angeordnet ist. Diese wird über eine Leitung 27 mit einem weiteren Steuersignal belegt. Der Ausgang 25 ist mit dem Eingang eines Zählers 28 verbunden, dessen Ausgang über einen elektronischen Schalter 29 mit einem Speicher 30 in Verbindung steht. Der Ausgang 33 des Speichers 30 ist mit einer weiter unten beschriebenen Vorrichtung 34 beschaltet.

Fig. 5 zeigt eine zweckmäßige Ausgestaltung der Bewerter 31...3n und 41...4n anhand des Bewerters 31. Er besteht aus einer Flip-Flop-Schaltung mit den Schalttransistoren T8 und )9 und den als schalbare Lastelemente betriebenen Transistoren T10 und T10'. Die Source-Anschlüsse von T8 und T9 sind über einen gemeinsamen Anschluß 35 an das Bezugspotential der Schaltung angeschlossen, die Drainanschlüsse von T10 und T10' über einen gemeinsamen Anschluß an die Versorgungsspannung $U_{DD}$. Der Eingangsknoten des Bewerters 31 ist mit 37 bezeichnet, der mit dem Ausgang A verbundene Ausgangsknoten mit 38. Zwischen den Gateelektroden von T8 und T9 und den Knoten 37 und 38 besteht eine Kreuzkopplung. Die Gateelektroden von T10 und T10' sind über einen gemeinsamen Anschluß mit einer Taktimpulsspannung $\emptyset4$ beschaltet. Die an die Knoten 37 und 38 angeschlossenen Schaltungsteile T11, 11 und T31 sowie T51 wurden bereits anhand der Fig. 1 beschrieben.

Die Wirkungsweise der Schaltung nach den Figuren 4 und 5 ergibt sich in Verbindung mit den Impuls-Zeit-Diagrammen nach Fig. 6. Wird einem Eingang 39 des Taktimpulsgebers 16 ein Triggerimpuls zugeführt, so gibt dieser zunächst Taktimpulse $\emptyset1$ und $\emptyset2$ ab. Damit werden die Sensorelemente, z. B. 11, und die Eingangsknoten, z. B. 37, der Bewerter über die hierdurch leitend geschalteten Transistoren, z. B. T11 und T31, auf die Versorgungsspannung $U_{DD}$ rückgesetzt. Ein gleichzeitig beginnender Taktimpuls $\emptyset 3$ schaltet T51 in den leitenden Zustand, so daß der Ausgangsknoten 38 auf die Referenzspannung $U_{Ref}$ gelegt wird. Beim Abschalten des Taktimpulses $\emptyset 1$ beginnen sich in den Sensorelementen, z. B. 11, durch die einfallenden Lichtstrahlen L1 bzw. L2 erzeugte Ladungsträger anzusammeln, wobei in den Sensorelementen ein Spannungsabfall entsteht. Je größer die in den Sensorelementen 11...1n und 21...2n jeweils angesammelten, optisch erzeugten Ladungen sind, desto stärker verringert sich das Potential an den zugeordneten Eingangsknoten, z. B. 37, der Bewerter. Die Zeitspanne zwischen dem Ende des Taktimpulses $\emptyset 1$ zum Zeitpunkt t1 und dem vorgegebenen Ende des Impulses $\emptyset 2$ zum Zeitpunkt t2 wird als Integrationszeit bezeichnet. Nur innerhalb dieser Zeitspanne sammeln sich optisch erzeugte Ladungen in den Sensorelementen an. Nach Beendigung des Taktimpulses $\emptyset 2$ und nach Beendigung des Taktimpulses $\emptyset 3$ wird ein Taktimpuls $\emptyset 4$ vom Taktimpulsgeber 16 an die Gateeleketroden von T10 und T10' gelegt, so daß die Flip-Flop-Schaltungen der Bewerter aktiviert werden. Am Ausgangsknoten, z. B. 38, stellt sich für den Fall, daß am Knoten 37 ein solcher Potentialabfall aufgetreten war, daß die Referenzspannung $U_{Ref}$ unterschritten wurde, eine Spannung ein, die etwa der Versorgungsspannung $U_{DD}$ entspricht (logische "1"). Wird dagegen $U_{Ref}$ durch die Spannung am Knoten 37 nicht unterschritten, so gelangt der Knoten 38 auf ein Potential, das etwa dem Bezugspotential am Anschluß 35 entspricht (logische "0"). Damit gibt jeder Bewerter ein digitalisiertes Sensorsignal, z. B. S11, ab, dessen Wert abhängig ist vom Erreichen oder Nichterreichen einer Bezugsladung in den einzelnen Sensorelementen, die gerade dann vorliegt, wenn das Potential am Knoten 37 zum Zeitpunkt T2 dem Potential des auf die Spannung $U_{Ref}$ rückgesetzten Knotens 38 gleichkommt. Beim Auftreten eines Taktimpulses $\emptyset5$ werden dann die digitalisierten Sensorsignale, z. B. S11, den Eingängen der zugeordneten Stufen, z. B. 51, der Schieberegister 5 und 6 zugeführt und in diesen gespeichert.

Der Taktimpulsgeber 16 liefert anschließend Taktimpulsfolgen $\emptyset1L$, $\emptyset2L$, $\emptyset1R$ und $\emptyset2R$, die die in den Stufen der Schieberegister 5 und 6 enthaltenen Informationen jeweils um eine Stufe verschieben. Vor dem Auftreten der Taktimpulse 43 und 44, die zu einer Taktperiode TPL1 gehören, erscheint das Sensorsignal S1n am Ausgang 5a. Die Taktimpulse 43 und 44 verschieben die Information S1n in die Stufe 51 und die Information S1(n-1) an den Ausgang 5a, und so weiter. Durch die Taktimpulse 45 und 46 der Taktperiode TPLn gelangt schließlich nach einem vollen Informationsumlauf wieder das Sensorsignal S1n an den Ausgang 5a. Es folgt eine Taktperiode TPLz mit den Taktimpulsen 47 und 48, durch die das Sensorsignal S1(n-1) am Ausgang 5a erscheint. Nach einer sich anschließenden, mit 49 bezeichneten Austastlücke schieben die Taktimpulse 53 und 54 der Taktperiode TPL1' die Sensorsignale wieder um eine Stufe weiter, so daß S1(n-1) in die Stufe 51 gelangt und S1(n-2) an den Ausgang 5a durchgeschaltet wird.

In einem Auslesezyklus Z1, der die Taktperioden TPL1 bis TPLn umfaßt, werden also die Sensorsignale S1n bis S1 und wieder S1n am Ausgang 5a seriell ausgegeben. In einem zweiten Auslesezyklus Z2, der die Taktperiode TPL1' und n-1 weitere Taktperioden umfaßt, erfolgt eine zweite serielle Ausgabe aller Sensorsignale des Bildsensors 1, wobei die Signale S1(n-1) bis S1 und wieder S1n und S1(n-1) an 5a auftreten. Innerhalb des ersten Auslesezyklus Z1 wird das Schieberegister 6 ebenfalls mit n Taktperioden TPR1 bis TPRn beaufschlagt, während den Taktimpulsen 47 und 48 entsprechende Impulse fehlen.
Das hat zur Folge, daß zu Beginn von Z2 das Sensorsignal S2n am Ausgang 6a und das Signal S1(n-1) am
Ausgang 5a anliegen.

Somit werden im ersten Auslesezyklus Z1 die Signalpaare
S1n und S2n, S1(n-1) und S2(n-1) usw. an 52 und 62
seriell ausgelesen, im zweiten Auslesezyklus dagegen
die Signalpaare S1(n-1) und S2n, S1(n-2) und S2(n-1)
usw. Die seriell ausgelesenen Informationen der Schieberegister 5 und 6 sind also in zwei aufeinanderfolgenden
Auslesezyklen um jeweils eine Signalbreite gegeneinander
verschoben. Nach n Auslesezyklen haben sie dann wieder
dieselbe zeitliche Zuordnung wie im Zyklus Z1. In Fig. 4
kann diese Verschiebung dadurch erreicht werden, daß
die Torschaltung 20 über die Leitung 24 während des
Auftretens der Taktimpulse 47 und 48, d. h. zwischen
den Taktperioden TPRn und TPR1', gesperrt wird. In
diesem Zeitraum kann die Torschaltung 26 über die
Steuerleitung 27 geöffnet werden, so daß einer der Impulse 47 oder 48 oder ein von diesen abgeleiteter Impuls am Ausgang 25 als Verschiebeimpuls P1 erscheint.
Dieser Verschiebeimpuls P1 kennzeichnet dabei den
Beginn eines neuen Auslesezyklus und eine gegenseitige
Verschiebung der an den Ausgängen 5a und 6a seriell
ausgelesene Sensorsignale um jeweils eine Signalbreite.

Die innerhalb eines Auslesezyklus, z. B. Z1, ausgelesenen
Sensorsignalpaare werden in der logischen Schaltung 8
nach der Exklusiv-Oder-Funktion bewertet. Dabei tritt
am Ausgang 55 von 8 immer dann ein Ausgangsimpuls auf,
wenn die eingangsseitig über 5a und 6a zugeführten digitalen Signale übereinstimmen. Stimmen sie nicht überein,
so wird von 8 kein Ausgangsimpuls abgegeben. Die Teilschaltung 8 kann aber auch so ausgebildet sein, daß
sie nur die Übereinstimmung zweier "1"-Signale oder zweier "0"-Signale an ihren Eingängen durch einen Ausgangsimpuls angibt. Der Zähler 10, der vor Beginn jedes Auslesezyklus, also in den Austastlücken 49, auf Null rückgesetzt wird, zählt dann die Anzahl der Übereinstimmungen innerhalb eines solchen Zyklus.

Hierbei wird der Zähler 10 allerdings nur während eines Teils jedes Auslesezyklus wirksam geschaltet, der durch einen von 16 abgegebenen Impuls $\emptyset$F bestimmt wird. Nimmt man an, daß der Zähler 10 im Auslesezyklus Z1 die Übereinstimmungen innerhalb der Taktperioden $TPR_i$ bis $TPR_k$ zählt, wobei die Differenz k-i etwa n/2 oder 3n/4 beträgt, so zählt er im Auslesezyklus Z2 die Übereinstimmungen innerhalb der Taktperioden $TPR'_{i+1}$ bis $TPR'_{k+1}$. Betrachtet man die Impulse $\emptyset$F1 und $\emptyset$F2 jeweils als "Auslesefenster", so haben sich die Sensorsignale des Schieberegisters 6 im Fenster $\emptyset$F2 gegenüber dem Fenster $\emptyset$F1 um eine Signalbreite nach links (Fig. 3) verschoben. Im nächsten Auslesezyklus Z3, in dem der entsprechende Impuls $\emptyset$F3 dieselben Taktimpulsperioden umfaßt wie in Z2, haben sich dann die Signale von 5 im "Fenster" $\emptyset$F3 um eine Signalbreite nach rechts verschoben. Wird das "Fenster" generell im ersten Auslesezyklus Z1 und in den weiteren Auslesezyklen Z3, Z5, Z7 usw. um eine Taktperiodenlänge jeweils nach rechts verschoben, so entspricht das einer abwechselnden Verschiebung der an 6a bzw. 5a abgegriffenen Sensorsignalfolgen in dem jeweiligen Fenster $\emptyset$F um eine Signalbreite nach links bzw. rechts. Diejenigen Impulse $\emptyset$F, die die vom Zeilenanfang und vom Zeilenende einer der Sensorelementenzeilen abgeleiteten Bewertersignale gleichzeitig umschließen würden, werden vom Taktimpulsgeber 16 unterdrückt. Hierdurch wird erreicht, daß die "Fenster" $\emptyset$F die Auswertung von denjenigen Sensorsignalen ausschalten, die von den in vertauschter Zuordnung nebeneinander stehenden Anfangs- und Endabschnitten der pro-

0035794

VPA 80 P 7019 E

jizierten Zeilenausschnitte abgeleitet worden sind, so daß sie keine Aussage über den tatsächlichen Helligkeitsverlauf längs des Zeilenausschnitts vermitteln.

Ist das Zählergebnis, das dem Eingang 56 des digitalen Komparators 13 zugeführt wird, größer als das an seinem Eingang 57 liegende digitale Signal, so werden die Steuereingänge der Schalter 14 und 29 mit einem Komparatorsignal beaufschlagt, so daß beide Schalter die an ihre Eingänge gelegten Signale an den jeweiligen Ausgang übertragen. Nachdem das Zählergebnis der Übereinstimmungen des ersten Informationszyklus Z1 als erstes digitales Signal dem Speicher 15 und über diesen dem Eingang 57 des Komparators zugeführt wird, wird danach nur noch ein solches Zählergebnis eines weiteren Informationszyklus Zi in den Speicher 15 übernommen, das größer ist als das größte jeweils zuvor gespeicherte. Die am Ende der Informationszyklen Z1, Z2 und so weiter auftretenden Verschiebeimpulse P1, P2 usw. werden im Zähler 28 gezählt. Da der Schalter 29 synchron mit dem Schalter 14 betätigt wird, überträgt er immer beim Auftreten eines größeren Zählergebnisses im Zähler 10 den jeweiligen Zählerstand von 28 auf den Speicher 30. Damit ist im Speicher 30 nach n Informationszyklen die Anzahl der Verschiebeimpulse Pi gespeichert, die die- jenige Informationsverschiebung zwischen den Sensor- signalen der Schieberegister 5 und 6 kennzeichnet, bei der die größte Anzahl von Übereinstimmungen auftritt. Mit anderen Worten: die Anzahl der im Speicher 30 gespeicherten Schiebeimpulse Pi gibt diejenige relative Verschiebung der in den Schieberegistern 5 und 6 umlaufenden Sensorsignale ab, bei der eine maximale Korrelation der miteinander verglichenen Sensorsignale besteht. Die in Fig. 6 angedeuteten Austastlücken 49, die z. B. zum jeweiligen Rücksetzen des Zählers 10 auf Null erforderlich sind, werden durch eine entsprechende Sperrung der Torschaltungen 19 und 20 über ihre Steuerleitungen 23 und 24 erzeugt.

Das am Ausgang 33 des Speichers 30 auftretende digitale Signal wird einer Vorrichtung 34 zugeführt, die den Abstand des gegenüber einer Bildebene bewegbaren Objektivs 2 so einstellt, daß der Gegenstand GE auf diese Bildebene scharf abgebildet wird. Eine Vorrichtung dieser Art ist beispielsweise in der deutschen Patentanmeldung P 28 13 915.3 (VPA 78 P 7025) und in der Zeitschrift "Electronics" vom 10. Nov. 1977 auf den Seiten 40 bis 44 beschrieben.

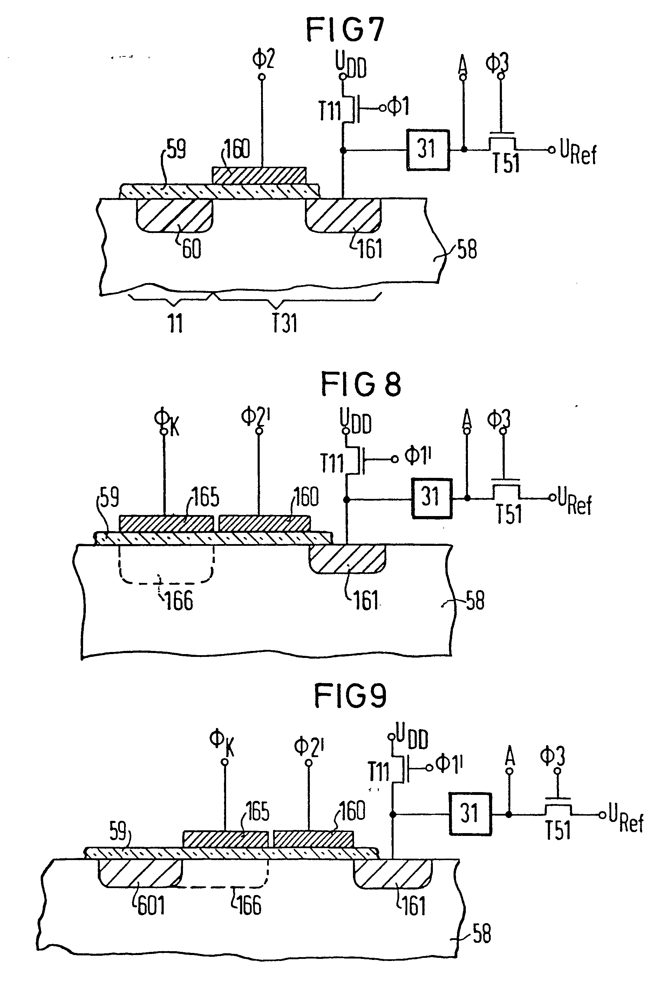

Fig. 7 zeigt eine bevorzugte schaltungstechnische Ausbildung der Sensorelemente 11...1n und 21...2n sowie der angrenzenden Schaltungsteile anhand des Sensorelementes 11. Auf einem dotierten Halbleiterkörper 58, z. B. aus p-dotiertem Silizium, ist eine dünne, elektrisch isolierende Schicht 59, z. B. aus $SiO_2$, vorgesehen. Der Bildsensor 11 ist hierbei las eine Fotodiode ausgebildet, die aus dem n-dotierten Halbleitergebiet 60 besteht. Dieses Gebiet bildet gleichzeitig auch das Source-Gebiet des Transistors T31. Das Gate von T31 ist auf der isolierenden Schicht 59 angeordnet und mit 160 bezeichnet. Das Drain-Gebiet von T31 trägt das Bezugszeichen 161. Dieses Gebiet ist einerseits über den Transistor T11 mit einem Anschluß verbunden, der mit der Konstantspannung $U_{DD}$ beschaltet ist und ist weiterhin mit dem Eingang des Bewerters 31 verbunden. Die Schaltungsteile T51 und A sind bereits anhand von Fig. 5 beschrieben.

Eine alternative Schaltung zu Fig. 7 zeigt Fig. 8. Danach besteht das Sensorelement 11 aus einem MIS-Kondensator (Metall-Isolierschicht-Halbleiter-Kondensator), der ein Gate 165 besitzt, das auf der Isolierschicht 59 angeordnet ist. Das Gate 165 ist z. B. aus hochdotiertem polykristallinem Silizium gefertigt und liegt an einer Taktimpulsspannung ØK, unter deren Einfluß sich eine Raumladungszone 166 im Halbleiterkörper 58 ausbildet.

Die weiteren Schaltungsteile von Fig. 5 entsprechen den mit gleichen Bezugszeichen versehenen Schaltungsteilen von Fig. 4, wobei darauf hingewiesen sei, daß der Transistor T11 mit einer Taktimpulsspannung Ø1' und der Transistor T31 mit einer Taktimpulsspannung Ø2' belegt ist. Die gleichzeitig beginnenden Taktimpulse Ø1', Ø2' und ØK bewirken bis zum Zeitpunkt t1 ein Rücksetzen des MIS-Kondensators im Bereich der Grenzfläche 58a des Halbleiterkörpers 58 etwa auf den Wert der Versorgungsspannung $U_{DD}$. Zum Zeitpunkt T1 beginnt in dem weiterhin mit ØK beaufschlagten MIS-Kondensator die Integrationszeit, in der optisch erzeugte Ladungsträger gesammelt werden. Mit dem Ende von ØK zum Zeitpunkt t2' ist auch das Ende der Integrationszeit erreicht. Kurz vor dem Zeitpunkt t2' wird ein neuer Taktimpuls Ø2' angelegt, so daß eine durch den Pfeil 504 (Fig. 3) angedeutete Ladungsübernahme von 166 stattfinden kann, die am Eingang des Bewerters eine entsprechende Potentialänderung hervorruft. Der Taktimpuls Ø1' muß, wie in Fig. 6 angedeutet ist, vor dieser Ladungsübernahme abgeschaltet werden.

Fig. 9 unterscheidet sich von Fig. 8 lediglich dadurch, daß eine Fotodiode 601 neben dem MIS-Kondensator 165, 166 angeordnet ist, und zwar auf der von T31 abgewandten Seite desselben. Die Gateelektrode von T31 ist mit der Impulsspannung Ø2' beschaltet, während der Gateelektrode von T11 die Taktimpulsspannung Ø1' zugeführt wird.

Die Kapazität des Sensorelements 11 nach Fig. 8 ist größer als die Kapazität des Sensorelements nach Fig. 7,

- 17 - 80 P 7 0 1 9 E

während die Kapazität des Sensorelements 11 nach Fig. 9
größer ist als die des Sensorelements nach Fig. 8.

Die in Fig. 4 dargestellte Schaltung kann mit besonderem Vorteil ganz oder teilweise auf einem dotierten Halbleiterkörper monolitisch integriert sein. Dabei ist der Halbleiterkörper, z. B. 58, vorzugsweise p-leitend ausgebildet und der übrige Schaltungsaufbau in MOS-n-Kanal-Technik ausgeführt. Der Halbleiterkörper liegt auf einem Bezugspotential, wobei die angegebenen Spannungen und Potentiale gegenüber diesem jeweils ein positives Vorzeichen aufweisen. Bei einem n-leitenden Halbleiterkörper und einer MOS-p-Kanal-Technik werden diese Vorzeichen negativ. Im Bereich der Bildsensoren 1 und 2 sind vor dem Halbleiterkörper Blenden angeordnet, in denen Öffnungen vorgesehen sind, durch die eine Belichtung der Sensorelemente erfolgt.

Als Infrarot-Leuchtdioden LE kommen beispielsweise solche des Typs LD271 in Betracht, die in dem Nachtrag 1977 zum Siemens-Datenbuch 1975/76 "Optoelektronische Halbleiter" auf den Seiten 55 bis 59 beschrieben und dargestellt sind. Bei Leuchtdioden, die im Spektralbereich des sichtbaren Lichtes arbeiten, kann es sich z. B. um solche des Typs LD52C handeln, die in dem genannten Nachtrag 1977 auf den Seiten 79 bis 83 aufgeführt sind.

Anstelle der Leuchtdiode LE kann aber im Rahmen der Erfindung auch eine andere Lichtquelle verwendet werden. Hierbei kann es sich beispielsweise um eine in Bezug auf die optischen Einrichtungen US1, US2, US3, US4, SL1 und SL2 (Fig. 1) ortsfest angeordnete Glühlampe handeln, die in Verbindung mit einer Blende oder Sammellinse einen scharf gebündelten Lichtstrahl erzeugt, oder um eine LASER-Anordnung. Hierbei kann es sich empfehlen, den von dieser erzeugten, zur zusätzlichen Beleuchtung des Gegenstandes GE verwendeten Laserstrahl mittels einer Zerstreuungslinse zu zerstreuen, um einen ausreichenden Öffnungswinkel des Lichtbündels zu erhalten.

Bisher wurde davon ausgegangen, daß der Entfernungsmesser nach der Erfindung gemäß Fig. 1 zur automatischen Fokussierung einer fotografischen oder elektronischen Kamera dient und in deren Gehäuse GE eingebaut bzw. mit diesem fest verbunden ist. Eine Alternative hierzu besteht darin, daß der Entfernungsmesser in das Gehäuse einer Blitzlichteinrichtung eingebaut bzw. mit diesem fest verbunden ist. In diesem Fall würde GE1 (Fig.1) das Gehäuse des Blichtlichtgerätes darstellen und OP etwa einen die eigentliche Blitzlichtquelle aufnehmenden Ansatz dieses Gehäuses. Die Blitzlichteinrichtung ist hierbei mit einer fotografischen oder elektronischen Kamera so zu koppeln, daß das am Ausgang 33 abgreifbare elektrische Signal einer in der Kamera vorgesehenen Fokussierungseinrichtung zugeführt wird.

Der Entfernungsmesser nach der Erfindung kann im übrigen auch so ausgebildet sein, daß über den Ausgang 33 der Auswerteschaltung AW ein Signal abgegeben wird, das nach einer entsprechenden Kodierung einer Anzeigevorrichtung zugeführt wird, die dann eine analoge oder digitale Anzeige der Entfernung des Gegenstandes GE liefert. In Verbindung mit einer fotografischen oder elektronischen Kamera müßte dann zum Zwecke der Fokussierung eine Einstellung auf die angezeigte Entfernung von Hand erfolgen.

Es sind auch weitere Anwendungsfälle für einen nach der Erfindung ausgebildeten Entfernungsmesser denkbar, bei denen er im allgemeinen nicht mit einer fotografischen oder elektronischen Kamera gekoppelt ist, beispielsweise bei der Messung der Position eines zu bearbeitenden Werkstückes in einer Werkzeugmaschine oder bei der Messung des Abstandes bzw. der Relativgeschwindigkeit zwischen zwei Fahrzeugen oder dergleichen.

12 Patentansprüche
 9 Figuren

**Patentansprüche**

1. Anordnung zur optoelektronischen Messung der Entfernung eines Gegenstandes mit zwei linearen, jeweils eine Mehrzahl von Sensorelementen aufweisenden Bildsensoren, mit zwei optischen Einrichtungen, die jeweils Ausschnitte einander entsprechender Zeilen zweier von dem Gegenstand getrennt erhaltener Abbildungen auf die linearen Bildsensoren projizieren und mit einer Auswerteschaltung, die in Abhängikeit von unterschiedlichen Positionsverschiebungen der von dem einen Bildsensor erhaltenen Sensorsignale gegenüber den von dem anderen Bildsensor erhaltenen Sensorsignalen eine maximale Korrelation zwischen diesen und die zu dieser gehörende Positionsverschiebung feststellt sowie eine der letzteren entsprechende, ein Maß für die Entfernung angebende elektrische Größe bildet, d a d u r c h   g e k e n n - z e i c h n e t ,   daß eine Lichtquelle (LE) vorgesehen ist, die in Bezug auf die optischen Einrichtungen (US1 bis US4, SL1, SL2) ortsfest angeordnet ist, und zwar derart, daß ein von ihr ausgehendes Lichtbündel mindestens einen Teil des Gegenstandes (GE) beleuchtet, wobei die von dem Lichtbündel erfaßte Fläche des Gegenstandes (GE) einschließlich ihrer unmittelbaren Umgebung innerhalb derjenigen Winkelbereiche der optischen Einrichtungen (US1 bis US4, SL1, SL2) liegt, die durch die auf beide Bildsensoren (1,2) projizierten Zeilenausschnitte linear abgetastet werden.

2. Anordnung nach Anspruch 1, d a d u r c h   g e - k e n n z e i c h n e t ,   daß im Strahlengang des Lichtbündels der Lichtquelle (LE) eine Sammellinse (SL3) angeordnet ist.

3. Anordnung nach einem der Ansprüche 1 oder 2, g e - k e n n z e i c h n e t   d u r c h   eine solche Anord-

0035794

VPA 80 P 7019 E

nung der Lichtquelle (LE), daß die von ihr beleuchtete
Fläche des Gegenstandes (GE) einschließlich ihrer unmittelbaren Umgebung von zentralen Teilen der projizierten Zeilenausschnitte abgetastet wird.

4. Anordnung nach einem der Ansprüche 1 bis 3, d a -
d u r c h   g e k e n n z e i c h n e t ,   daß die
Lichtquelle aus einer oder mehreren Leuchtdioden (LE)
besteht.

5. Anordnung nach Anspruch 4, d a d u r c h   g e -
k e n n z e i c h n e t ,   daß die Leuchtdiode (LE) als
Infrarot-Leuchtdiode ausgebildet ist, deren Strahlung
in einem Spektralbereich oberhalb desjenigen des sichtbaren Lichtes liegt.

6. Anordnung nach einem der Ansprüche 1 bis 3, d a -
d u r c h   g e k e n n z e i c h n e t ,   daß die
Lichtquelle aus einer LASER-Anordnung besteht, in deren
Strahlengang gegebenenfalls eine Zerstreuungslinse
angeordnet ist.

7. Anordnung nach einem der Ansprüche 1 bis 6, d a -
d u r c h   g e k e n n z e i c h n e t ,   daß die
Lichtquelle (LE) über einen elektronischen Schalter
(ESC) an eine Betriebsspannungsquelle (BA) geschaltet
ist und daß der elektronische Schalter (ESC) einen
Steuereingang (DA) aufweist, der mit einer triggerbaren
Steuerspannungsquelle (MF) beschaltet ist.

8. Anordnung nach Anspruch 7, d a d u r c h   g e -
k e n n z e i c h n e t ,   daß die Steuerspannungsquelle
aus einem Monoflop besteht, dessen Takteingang (EMF)
über einen Auslöseschalter ESC1 mit der Betriebsspannungsquelle (BA) verbunden ist.

9. Anordnung nach einem der vorhergehenden Ansprüche, d a d u r c h   g e k e n n z e i c h n e t ,   daß sie einen Bestandteil einer fotografischen oder elektronischen Kamera (GE1) darstellt.

10. Anordnung nach einem der Ansprüche 1 bis 8, d a - d u r c h   g e k e n n z e i c h n e t ,   daß sie einen Bestandteil eines mit einer fotografischen oder elektronischen Kamera gekoppelten Blitzlichtgerätes darstellt.

11. Anordnung nach einem der Ansprüche 9 oder 10, d a d u r c h   g e k e n n z e i c h n e t ,   daß die Kamera eine Fokussiereinrichtung (34) aufweist, die mit dem Ausgang (33) der Auswerteschaltung (AW) gekoppelt ist.

12. Anordnung nach einem der vorhergehenden Ansprüche, d a d u r c h   g e k e n n z e i c h n e t ,   daß der Ausgang (33) der Auswerteschaltung (AW) mit einer die Entfernung des Gegenstandes (GE) analog oder digital anzeigenden Vorrichtung beschaltet ist.

FIG 1

## FIG 2

BA(+U_B)

LE

SBW

EMF

MF

SBW1

DA

ESC

ESC1

CA

## FIG 3

VTG1
VTG2

VTG2

VTG1

LG1

FIG 4

FIG 5

FIG6

## FIG 7

## FIG 8

## FIG9

**Europäisches Patentamt**

## EUROPÄISCHER RECHERCHENBERICHT

EP 81 10 1771.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| T | Patents Abstracts of Japan<br>Band 3, Nr. 146, 4. Dezember 1979<br>Seite 65E156<br>& JP - A - 54 - 126023<br>& US - A - 4 257 705<br>--- | 1-4 |
| | DE - A1 - 2 432 067 (HONEYWELL)<br>* Anprüche 1, 16; Fig. 1 *<br>--- | 1 |
| | DE - A1 - 2 929 268 ( FUJI PHOTO<br>    OPTICAL)<br>* Ansprüche *<br>--- | 1 |
| | DE - A1 - 2 842 348 (CANON)<br>* Seiten 1 bis 20; Fig. 32, 33 *<br>--- | 1 |
| D,P | DE - A1 - 2 838 647 (SIEMENS)<br>* Anspruch 1 *<br>---- | 1 |

### KLASSIFIKATION DER ANMELDUNG (Int. Cl.³)

G 03 B    3/10
G 01 C    3/08
G 02 B    7/11

### RECHERCHIERTE SACHGEBIETE (Int. Cl.³)

G 01 C    3/00
G 02 B    7/00
G 03 B    3/00
G 03 B    13/00

### KATEGORIE DER GENANNTEN DOKUMENTE

X: von besonderer Bedeutung
A: technologischer Hintergrund
O: nichtschriftliche Offenparung
P: Zwischenliteratur
T: der Erfindung zugrunde liegende Theorien oder Grundsätze
E: kollidierende Anmeldung
D: in der Anmeldung angeführtes Dokument
L: aus andern Gründen angefuhrtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 16-06-1981 | HOPPE |

EPA form 1503.1  06.78